# EUROPEAN PATENT SPECIFICATION

(11) **EP 3 591 816 B1**
(45) Date of publication and mention of the grant of the patent: **25.03.2026**
(21) Application number: 17898389.6
(22) Date of filing: 01.03.2017
(51) Int. Cl.: H02K 7/10, F16H 55/36

(54) **MOTOR GENERATOR**
MOTORGENERATOR
MOTEUR-GÉNÉRATEUR

(43) Date of publication of application: 08.01.2020
(73) Proprietor: Mitsubishi Electric Corporation, Chiyoda-ku Tokyo 100-8310 (JP)
(72) Inventor: HASEGAWA Kazuya, Tokyo 100-8310 (JP); SAKAGUCHI Masayuki, Tokyo 102-0073 (JP); SASAKI Daisuke, Tokyo 100-8310 (JP)
(74) Representative: Santarelli
(86) International application number: PCT/JP2017/008052
(87) International publication number: WO 2018/158870

(56) References cited:
- CN-A- 104 790 922
- DE-A1- 102012 201 676
- JP-A- 2001 227 620
- JP-A- 2003 322 212
- JP-A- 2009 284 748
- JP-U- S5 134 954
- US-A1- 2009 264 234

## Description

### TECHNICAL FIELD

The present invention relates to a motor generator that performs bidirectional transfer of driving power between an external apparatus and itself through the intermediary of a pulley.

### BACKGROUND ART

With regard to such a motor generator as described above, a technology disclosed in after-mentioned PLT 1 is known. In the technology disclosed in PLT 1, a pulley is fastened to a rotation axle by screwing a nut. In the technology disclosed in PLT 1, a key groove and a key, as a rotation locker, are provided in a fitting portion between the pulley and the rotation axle so that in the case where for example, when an internal combustion engine is started, the pulley transfers driving power having a direction in which the nut loosens, rotation torque exerting on the pulley is prevented from loosening the nut.

Documents US 2009/264234 A1, DE102012201676 A1 and CN104790922A disclose motor-generators of the prior art.

### CITATION LIST

### Patent Literature

PLT 1: JP 2003-61307 A

### SUMMARY OF INVENTION

### Technical Problem

However, because in the technology disclosed in PLT 1, a minute gap for fitting or the like exists between the key groove and the key and hence the pulley may minutely pivot with respect to the rotation axle, the minute relative pivoting may gradually loosen the nut. When the nut loosens and falls off the rotation axle, the pulley may fall out of the rotation axle.

Thus, there is desired a motor generator that makes it possible that even when the nut for fastening the pulley to the rotation axle loosens, the pulley is prevented from falling out of the rotation axle.

### Solution to Problem

A motor generator according to the present invention is defined in claim 1. It includes a rotation axle pivotably supported by a bracket, a rotor fixed on the rotation axle, a stator that has a stator iron core disposed at the radial-direction outer side of the rotor and a stator winding mounted on the stator iron core and is fixed to the bracket, and a pulley that is fastened to one end of the rotation axle which is the end at the axial-direction one side, in such a way as to rotate integrally with the rotation axle and that performs bidirectional transfer of driving power between an external apparatus and itself; the pulley comprising a main portion around which a belt is wound and an inner supporting portion that supports the pulley main portion from the radial direction inner side, wherein while being fitted to the outer circumferential surface of the one end of the rotation axle, the pulley is fastened to the rotation axle with a nut screwed to a male screw portion provided in the outer circumferential surface of the rotation axle at the axial-direction one side of the fitting portion of the pulley, and on a portion of the rotation axle at the axial-direction one side axially further than the nut, there is mounted a pulley falling prevention member that prevents the pulley from falling out of the rotation axle when the nut loosens, wherein the pulley falling prevention member has a base portion extending from the portion of the rotation axle, on which the pulley falling prevention member is mounted, toward the radial-direction outer side, and an axial-direction extending portion extending from the base portion toward the axial-direction the other side in a space at the radial-direction outer side of the nut, and the radial direction inner side of the main portion of the pulley and wherein when the nut loosens, an endface of the axial-direction extending portion at the axial-direction the other side abuts on the pulley so that the pulley is prevented from falling out of the rotation axle,
wherein, while the pulley is fastened to the rotation axle through screwing of the nut, a gap in the axial direction is provided between the end face of axial-direction extending portion and the inner supporting portion of the pulley and a gap in the axial direction is provided between the base portion and the nut, wherein the gap between the axial-direction extending portion and the pulley is narrower than the gap between the base portion and the nut, and the axial length of each of the gaps is constant along the radial direction.

Preferred features of the invention are recited in the dependent claims.

### Advantage of the Invention

A motor generator according to the present invention makes it possible that even when the nut loosens, the pulley falling prevention member prevents the pulley from falling out of the rotation axle.

### BRIEF DESCRIPTION OF THE DRAWINGS

FIG. 1 is a cross-sectional view of a motor generator according to Embodiment 1 of the present invention;
FIG. 2 is a principal-part cross-sectional view of a motor generator according to Embodiment 1 of the present invention;
FIG. 3 is a perspective view of a pulley falling prevention member according to Embodiment 1 of the present invention;
FIG. 4 is a perspective view of a pulley falling prevention member according to Embodiment 2 of the present invention;
FIG. 5 is a principal-part cross-sectional view of a motor generator according to Embodiment 3 of the present invention;
FIG. 6 is a principal-part cross-sectional view of a motor generator according to Embodiment 4 of the present invention; and
FIG. 7 is a principal-part cross-sectional view of a motor generator according to Embodiment 5 of the present invention.

### DESCRIPTION OF EMBODIMENTS

### Embodiment 1

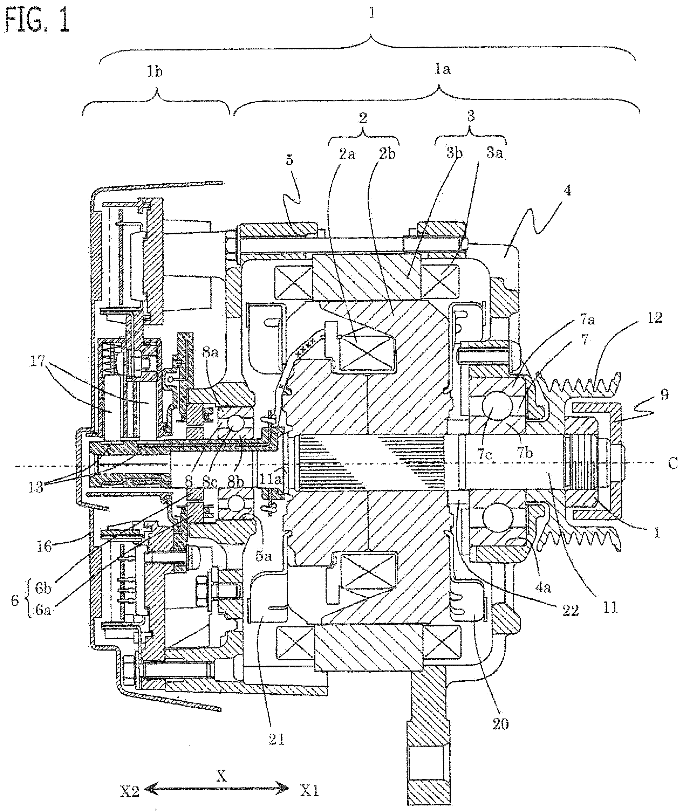

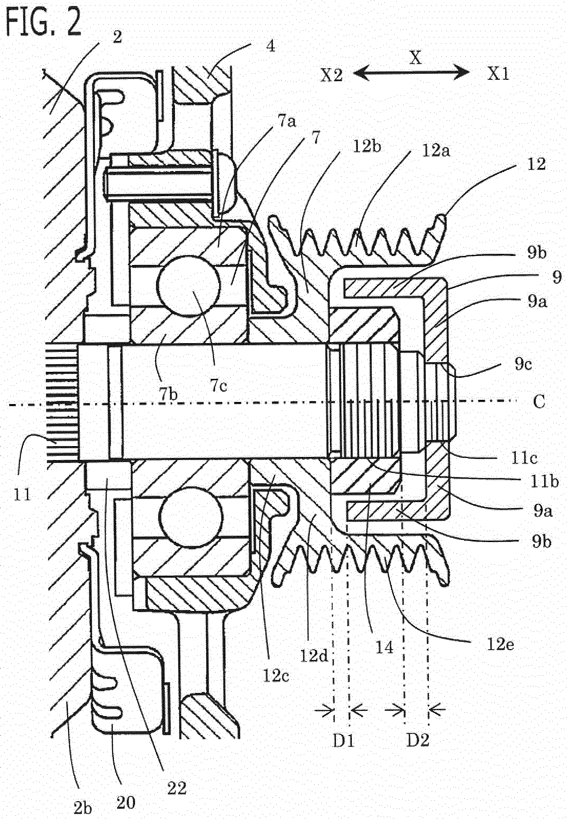

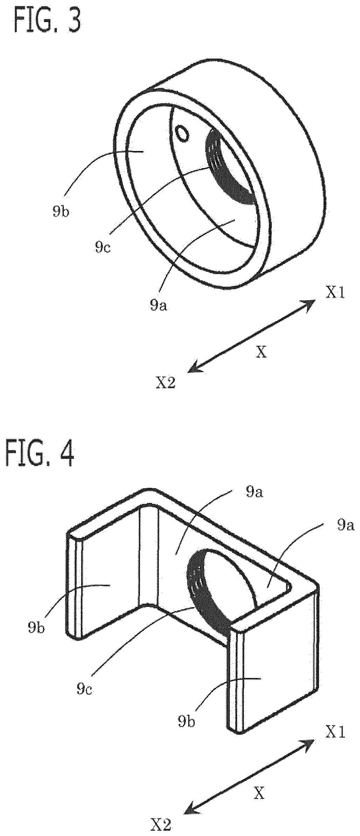

A motor generator 1 according to Embodiment 1 will be explained with reference to drawings. FIG. 1 is a cross-sectional view of the motor generator 1, taken along a plane passing through the rotation axial center C of a rotation axle 11; FIG. 2 is a principal-part cross-sectional view in which FIG. 1 is enlarged; FIG. 3 is a perspective view of a pulley falling prevention member 9 according to the present embodiment.

The direction parallel to the rotation axial center C of the rotation axle 11 is defined as an axial direction X; one side of the axial direction X is defined as an axial-direction one side X1; the side opposite to the axial-direction one side X1 in the axial direction X is defined as an axial-direction the other side X2. The radial direction and the circumferential direction are defined as those with respect to the rotation axial center C.

In the motor generator 1, a motor generator main body 1a and a controller 1b are integrally configured with each other, i.e., the motor generator 1 is a controller-integrated motor generator. The controller 1b is mounted at the axial-direction the other side X2 of the motor generator main body 1a (a rear bracket 5).

The motor generator main body 1a is provided with a bracket, the rotation axle 11, a rotor 2, a stator 3, and a pulley 12. The bracket supports respective constituent components. The rotation axle 11 is pivotably supported by the bracket. The rotor 2 is fixed on the rotation axle 11 and rotates integrally with the rotation axle 11. The stator 3 has a stator iron core 3b disposed at the radial-direction outer side of the rotor 2 and a stator winding 3a mounted on the stator iron core 3b and is fixed to the bracket. The pulley 12 is fastened to one end, which is the end of the rotation axle 11 at the axial-direction one side X1, in such a way as to rotate integrally with the rotation axle 11, and performs bidirectional transfer of driving power between an external apparatus and itself.

In the present embodiment, the motor generator 1 is mounted in a vehicle; the external apparatus is a driving power transfer apparatus that transfers driving power to an internal combustion engine and a wheel. The pulley 12 is coupled with the crankshaft of the internal combustion engine through the intermediary of a belt. The crankshaft of the internal combustion engine is coupled with the wheel through the intermediary of the driving power transfer apparatus.

The motor generator 1 can perform the function of an electric motor that receives electric power and generates driving power, and the function of an electric power generator that receives driving power and generates electric power. Specifically, the motor generator 1 is supplied with electric power by an electric storage device so as to perform power driving and transfers driving power to one of or both of the internal combustion engine and the driving power transfer apparatus through the intermediary of the pulley 12; alternatively, the motor generator 1 stores electric power, generated by rotation driving power transferred from one of or both of the internal combustion engine and the driving power transfer apparatus, in the electric storage device.

For example, in order to start the internal combustion engine or to drive the wheel, the motor generator 1 functions as an electric motor. The motor generator 1 functions as an electric power generator, by use of driving power of the internal combustion engine or by use of driving power transferred from the wheel through the intermediary of the driving power transfer apparatus.

The rotation axle 11 is a cylindrical columnar axle body. The inner circumferential surface of the rotor 2 is fitted and fixed to the outer circumferential surface of the rotation axle 11. In the present embodiment, the outer circumferential surface of the rotation axle 11 and the inner circumferential surface of the rotor 2 are coupled with each other through spline coupling so that rotation thereof is locked. The outer circumferential surface of the rotation axle 11 and the inner circumferential surface of the rotor 2 may be fixed to each other through shrinkage fitting, a key groove, or the like. The rotation axle 11 is pivotably supported by the bracket at both the axial-direction one side X1 and the axial-direction the other side X2 of the rotor 2, through the intermediary of a front bearing 7 and a rear bearing 8, respectively.

Each of the front bearing 7 and the rear bearing 8 is a rolling bearing; the front bearing 7 includes a cylindrical tubular outer race 7a, a cylindrical tubular inner race 7b disposed at the radial-direction inner side of the outer race 7a, and a plurality of rolling bodies (balls, in this example) 7c pinched between the outer race 7a and the inner race 7b; the rear bearing 8 includes a cylindrical tubular outer race 8a, a cylindrical tubular inner race 8b disposed at the radial-direction inner side of the outer race 8a, and a plurality of rolling bodies (balls, in this example) 8c pinched between the outer race 8a and the inner race 8b.

The bracket is provided with a front bracket 4 at the axial-direction one side X1 and a rear bracket 5 at the axial-direction the other side X2. The front bracket 4 and the rear bracket 5 are fastened to each other with bolts. The front bracket 4 is formed in the shape of a bowl that has a plurality of ventilating holes and that covers the axial-direction one side X1 of the rotor 2 and the stator 3 and the radial-direction outer side of the portions of the rotor 2 and the stator 3 at the axial-direction one side X1. The rear bracket 5 is formed in the shape of a bowl that has a plurality of ventilating holes and that covers the axial-direction the other side X2 of the rotor 2 and the stator 3 and the radial-direction outer side of the portions of the rotor 2 and the stator 3 at the axial-direction the other side X2. In the vicinity of the rotation axial center C, the front bracket 4 has a front through-hole 4a that is penetrated by the rotation axle 11. In the vicinity of the rotation axial center C, the rear bracket 5 has a rear through-hole 5a that is penetrated by the rotation axle 11.

The outer circumferential surface of the outer race 7a of the front bearing 7 is fit to the inner circumferential surface of the front through-hole 4a. The inner circumferential surface of the inner race 7b of the front bearing 7 is fit to the outer circumferential surface of the rotation axle 11 at the axial-direction one side X1 of the rotor 2. The outer circumferential surface of the outer race 8a of the rear bearing 8 is fit to the inner circumferential surface of the rear through-hole 5a. The inner circumferential surface of the inner race 8b of the rear bearing 8 is fit to the outer circumferential surface of the rotation axle 11 at the axial-direction the other side X2 of the rotor 2.

In the present embodiment, the motor generator 1 is a coil-magnetic-field synchronous machine; a magnetic-field winding 2a and a magnetic-field iron core 2b are provided in the rotor 2. A front fin 20 is mounted on the endface of the magnetic-field iron core 2b at the axial-direction one side X1; a rear fin 21 is mounted on the endface of the magnetic-field iron core 2b at the axial-direction the other side X2. The stator winding 3a is a three-phase winding.

The controller 1b is provided with an inverter that performs conversion between DC electric power in the electric storage device and AC electric power in the three-phase winding, a magnetic-field-winding switching device that controls electric power to be supplied to the magnetic-field winding 2a, a rotation angle detection sensor 6 that detects the rotation angle of the rotation axle 11, and a control circuit that controls a switching device in the inverter and the magnetic-field-winding switching device. The controller 1b is provided with a connection terminal (unillustrated) for connection with the electric storage device and an external controller.

The rotation angle detection sensor 6 is a resolver and is disposed at the axial-direction the other side X2 of the rear bearing 8. A rotor 6b of the resolver is fit to the outer circumferential surface of the rotation axle 11; a stator 6a of the resolver is fit to the inner circumferential surface the rear through-hole 5a. Two brushes 17 that make contact with two respective slip rings 13 disposed on the outer circumferential surface of the rotation axle 11 are provided at the axial-direction the other side X2 of the rotation angle detection sensor 6. Two connection lines for connecting the two slip rings 13 with the magnetic-field winding 2a are embedded in the rotation axle 11. Each of the two brushes 17 is connected with the magnetic-field-winding switching device.

At the radial-direction outer side of the slip ring 13 and the brush 17, the inverter, the magnetic-field-winding switching device, and the control circuit are arranged in a dispersed manner in the circumferential direction. A cover 16 covers the axial-direction the other side X2 and the radial-direction outer side of the controller 1b.

### <pulley 12>

As illustrated in FIG. 2, the pulley 12 is fit to the outer circumferential surface of one end, which is the end of the rotation axle 11 at the axial-direction one side X1. In the present embodiment, the pulley 12 has a cylindrical tubular pulley main portion 12a, around which a belt is wound, and an inner supporting portion 12b that supports the pulley main portion 12a from the radial-direction inner side and is fit to the outer circumferential surface of the rotation axle 11.

In the outer circumferential surface of the pulley main portion 12a, a plurality of grooves extending in the circumferential direction are formed in a line in the axial direction X; the belt is wound around the grooves. The inner supporting portion 12b has a cylindrical tubular boss portion 12c whose inner circumferential surface is fit to the outer circumferential surface of the rotation axle 11 and a cylindrical tubular radial-direction extending portion 12d that extends from a portion of the boss portion 12c at the axial-direction one side X1 toward the radial-direction outer side. The pulley main portion 12a has a cylindrical tubular one-side pulley extending portion 12e that extends from the connection portion between the inner supporting portion 12b (radial-direction extending portion 12d) and itself toward the axial-direction one side X1. The inner circumferential surface of the inner supporting portion 12b (boss portion 12c) is fit to the outer circumferential surface of the rotation axle 11 at the axial-direction one side X1 of the front bearing 7.

### <fastening of the pulley 12 with a nut 14>

A male screw portion 11b in which screw threads are formed is provided in the outer circumferential surface of the rotation axle 11 at the axial-direction one side X1 of the fitting portion of the pulley 12. The nut 14 is screwed to the male screw portion 11b from the axial-direction one side X1. While being fit to the outer circumferential surface of the one end of the rotation axle 11, the pulley 12 is fastened to the rotation axle 11 by the nut 14 screwed to the male screw portion 11b of the rotation axle 11.

In the present embodiment, due to a thrust load produced through screwing of the nut 14, the endface of the nut 14 at the axial-direction the other side X2 presses the endface of the pulley 12 at the axial-direction one side X1 and hence there is produced frictional force between the endface of the nut 14 at the axial-direction the other side X2 and the endface of the pulley 12 at the axial-direction one side X1, so that the pulley 12 is fastened to the rotation axle 11 through the intermediary of the nut 14. Moreover, there is produced frictional force between the endface of the pulley 12 at the axial-direction the other side X2 and the components of the rotor 2, so that the pulley 12 is fastened to the rotation axle 11 through the intermediary of the rotor 2.

At the radial-direction inner side of the one-side pulley extending portion 12e of the pulley main portion 12a, the nut 14 is disposed spaced by a gap away from the one-side pulley extending portion 12e and presses the endface of the inner supporting portion 12b at the axial-direction one side X1 toward the axial-direction the other side X2 so as to fasten the pulley 12 to the rotation axle 11.

The endface of the inner supporting portion 12b (boss portion 12c) of the pulley 12 at the axial-direction the other side X2 abuts on the endface of the inner race 7b of the front bearing 7 at the axial-direction one side X1. A cylindrical tubular spacer 22 fit to the outer circumferential surface of the rotation axle 11 is provided between the inner race 7b and the rotor 2 (magnetic-field iron core 2b). The endface of the spacer 22 at the axial-direction one side X1 abuts on the endface of the inner race 7b at the axial-direction the other side X2; the endface of the spacer 22 at the axial-direction the other side X2 abuts on the endface of the rotor 2 at the axial-direction one side X1.

The pulley 12 is supported by the rotor 2 from the axial-direction the other side X2, through the intermediary of the front bearing 7 and the spacer 22. The rotor 2 is supported by a flange portion 11a provided on the rotation axle 11 from the axial-direction the other side X2 (refer to FIG. 1).

### <problem of loosening of the nut 14>

In the case where through the intermediary of the pulley 12, driving power is transferred between the motor generator 1 and the external apparatus in a direction in which the nut 14 is tightened (for example, in the case where the motor generator 1 functions as an electric power generator and hence the driving power is transferred from the external apparatus to the motor generator 1), the probability that the nut 14 loosens is low. However, in the case where driving power is transferred in a direction in which the nut 14 loosens (for example, in the case where the motor generator 1 functions as an electric motor and hence the driving power is transferred from the motor generator 1 to the external apparatus), the probability that the nut 14 loosens is high.

When the nut 14 loosens and falls off the rotation axle 11, the pulley 12 may fall out of the rotation axle 11. It is desirable that even when the nut 14 loosens, the pulley 12 is prevented from falling.

### <pulley falling prevention member 9>

Accordingly, on a portion of the rotation axle 11 at the axial-direction one side X1 of the nut 14, there is mounted the pulley falling prevention member 9 that prevents the pulley 12 from falling out of the rotation axle 11 when the nut 14 loosens. This configuration makes it possible that even when the nut 14 loosens, the pulley falling prevention member 9 prevents the pulley 12 from falling out of the rotation axle 11.

In the present embodiment, the pulley falling prevention member 9 has a base portion 9a extending from the portion, on which the pulley falling prevention member 9 is mounted, toward the radial-direction outer side and an axial-direction extending portion 9b extending from the base portion 9a toward the axial-direction the other side X2 in a space at the radial-direction outer side of the nut 14. When the nut 14 loosens, the endface of the axial-direction extending portion 9b at the axial-direction the other side X2 abuts on the pulley 12 (in this example, the endface of the inner supporting portion 12b at the axial-direction one side X1), so that the pulley 12 is prevented from falling out of the rotation axle 11.

There will be considered a comparative example in which unlike the present embodiment, the pulley falling prevention member indirectly prevents the pulley 12 from falling out of the rotation axle 11 through the intermediary of the nut 14. In this case, a case may occur where when the pulley 12 idly rotates with respect to the rotation axle 11, frictional force between the pulley 12 and the nut 14 makes the nut 14 rotate in a direction in which the nut loosens and hence there is produced a thrust load with which the nut 14 presses the pulley falling prevention member toward the axial-direction one side X1. When due to some factors such as the speed of idle rotation and the tension of the belt, the frictional force becomes large and hence the thrust load becomes large, the pulley falling prevention member may be detached from the rotation axle 11. However, in the foregoing configuration, when the nut 14 loosens, the endface of the axial-direction extending portion 9b at the axial-direction the other side X2 abuts on the pulley 12, so that the pulley 14 can be prevented from falling out of the rotation axle 11, without the intermediary of the nut 14. Accordingly, because the frictional force between the pulley 12 and the nut 14 can be prevented from being produced, it can be prevented that there is produced a thrust load with which the nut 14 presses the pulley falling prevention member 9 toward the axial-direction one side X1. Therefore, it can be prevented that the thrust load on the nut 14 makes the pulley falling prevention member 9 detached from the rotation axle 11. Moreover, the base portion 9a can prevent the nut 14 from falling out of the rotation axle 11.

As illustrated in FIG. 2, while the pulley 12 is fastened to the rotation axle 11 through screwing of the nut 14, a gap D1 in the axial direction X is provided between the axial-direction extending portion 9b and the pulley 12 (in this example, the inner supporting portion 12b), and a gap D2 in the axial direction X is provided between the base portion 9a and the nut 14; the gap D1 between the axial-direction extending portion 9b and the pulley 12 is narrower than the gap D2 between the base portion 9a and the nut 14.

In this configuration, in the case where the nut 14 loosens and hence the pulley 12 travels toward the axial-direction one side X1, the endface of the pulley 12 (inner supporting portion 12b) at the axial-direction one side X1 abuts on the endface of the axial-direction extending portion 9b at the axial-direction the other side X2 and does not abut on the endface of the nut 14 at the axial-direction the other side X2. Accordingly, because the frictional force between the pulley 12 and the nut 14 can be prevented from being produced, it can be prevented that due to a thrust load on the nut 14, the pulley falling prevention member 9 becomes off the rotation axle 11.

Moreover, the contact area between the pulley falling prevention member 9 and the pulley 12 is smaller than the contact area between the nut 14 and the pulley 12. This configuration makes it possible to suppress the frictional force between the pulley falling prevention member 9 and the pulley 12 and to reduce the effect of idle rotation of the pulley 12 to the pulley falling prevention member 9.

The axial-direction extending portion 9b of the pulley falling prevention member 9 is disposed in a cylindrical tubular space between the one-side pulley extending portion 12e of the pulley main portion 12a and the nut 14. This configuration makes it possible that the pulley falling prevention member 9 is disposed by effectively utilizing the cylindrical tubular space between the pulley main portion 12a and the nut 14; thus, the motor generator 1 can be suppressed from being upsized. Moreover, because the pulley main portion 12a can cover the radial-direction outer side of the pulley falling prevention member 9, the pulley falling prevention member 9 can be protected. The base portion 9a of the pulley falling prevention member 9 is disposed at the radial-direction inner side of the one-side pulley extending portion 12e of the pulley main portion 12a.

The axial-direction extending portions 9b and the base portions 9a are each provided at a plurality of positions in the circumferential direction. This configuration makes it possible that when the nut 14 loosens, the pulley 12 is stably supported from the axial-direction one side X1 at the plurality of positions in the circumferential direction; thus, it is made possible that biased force is exerted on neither the pulley 12 nor the pulley falling prevention member 9.

In the present embodiment, as illustrated in FIG. 3, the base portion 9a is formed in the shape of a disk. The axial-direction extending portion 9b is formed in the shape of a cylindrical tube that extends from the radial-direction outer end portion of the base portion 9a toward the axial-direction the other side X2. This configuration makes it possible that the pulley 12 is stably supported from the axial-direction one side X1; thus, it is made possible to suppress biased force from being exerted on the pulley 12 and the pulley falling prevention member 9.

As illustrated in FIG. 2, a small-diameter male screw portion 11c having a diameter smaller than the diameter of the male screw portion 11b is provided at the axial-direction one side X1 of the male screw portion 11b at the one end of the rotation axle 11. A female screw portion 9c provided in the pulley falling prevention member 9 is screwed to the small-diameter male screw portion 11c, so that the pulley falling prevention member 9 is mounted on the one end of the rotation axle 11. There is provided a through-hole that penetrates the central portion of the base portion 9a of the pulley falling prevention member 9 in the axial direction X; the female screw portion 9c is provided in the inner circumferential surface of the foregoing through-hole.

In this configuration, because of being screwed, the pulley falling prevention member 9 can readily be attached to the rotation axle 11; moreover, the pulley falling prevention member 9 can readily be detached from the rotation axle 11.

In the present embodiment, the small-diameter male screw portion 11c is a screw in which threading is made in a direction opposite to the direction of threading in the male screw portion 11b. In this configuration, even in the case where driving power in a direction in which the nut 14 loosens is transferred to the pulley 12 and hence the nut 14 loosens, the frictional force between the pulley 12 and the pulley falling prevention member 9 is the one in a direction in which the pulley falling prevention member 9 is tightened; thus, the pulley falling prevention member 9 can be suppressed from loosening.

### Embodiment 2

Next, a motor generator 1 according to Embodiment 2 will be explained. The explanation for constituent portions that are the same as those in foregoing Embodiment 1 will be omitted. The basic circuit configuration of the motor generator 1 according to the present embodiment is similar to that of Embodiment 1; however, the shape of a pulley falling prevention member 9 is different from that of the pulley falling prevention member 9 in Embodiment 1. FIG. 4 is a perspective view of the pulley falling prevention member 9 according to the present embodiment.

Also in the present embodiment, as is the case with Embodiment 1, the axial-direction extending portions 9b and the base portions 9a of the pulley falling prevention member 9 are each provided at a plurality of positions in the circumferential direction. However, unlike Embodiment 1, the axial-direction extending portion 9b and the base portion 9a are each provided at circumferential-direction two positions that are in point symmetry with each other with respect to the rotation axial center C.

This configuration makes it possible that the pulley 12 is stably supported from the axial-direction one side X1 at the circumferential-direction two positions, while when the nut 14 loosens, the contact area between the pulley falling prevention member 9 and the pulley 12 is reduced.

The base portion 9a is formed in the shape of a rectangular plate extending in the radial direction; there is provided a through-hole that penetrates the central portion of the base portion 9a in the axial direction X; the female screw portion 9c is provided in the inner circumferential surface of the foregoing through-hole. Each of the axial-direction extending portion 9b is formed in the shape of a rectangular plate that extends from the radial-direction outer end portion of the base portion 9a toward the axial-direction the other side X2. This configuration makes it possible that the pulley falling prevention member 9 is formed by bending a metal plate in the shape of a rectangular plate in a square U-shaped manner; thus, the production costs of the pulley falling prevention member 9 can be reduced.

### Embodiment 3

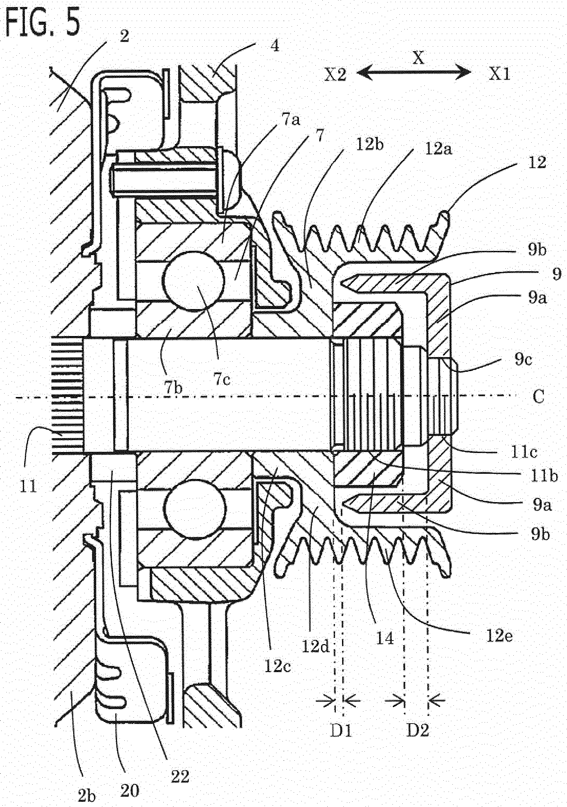

Next, a motor generator 1 according to Embodiment 3 will be explained. The explanation for constituent portions that are the same as those in foregoing Embodiment 1 will be omitted. The basic circuit configuration of the motor generator 1 according to the present embodiment is similar to that of Embodiment 1; however, the shape of a pulley falling prevention member 9 is different from that of the pulley falling prevention member 9 in Embodiment 1. FIG. 5 is a principal-part cross-sectional view of the motor generator 1 according to the present embodiment, taken along a plane passing through the rotation axial center C of the rotation axle 11.

Also in the present embodiment, as is the case with Embodiment 1, the pulley falling prevention member 9 has a base portion 9a extending from the portion, on which the pulley falling prevention member 9 is mounted, toward the radial-direction outer side and an axial-direction extending portion 9b extending from the base portion 9a to the axial-direction the other side X2 in a space at the radial-direction outer side of the nut 14. However, unlike Embodiment 1, the front-end portion of the axial-direction extending portion 9b at the axial-direction the other side X2 has a tapered shape in which the cross-sectional area thereof decreases as the axial-direction extending portion 9b extends toward the axial-direction the other side X2.

This configuration makes it possible that when the nut 14 loosens, the contact area between the front-end portion of the axial-direction extending portion 9b and the pulley decreases; thus, the frictional force between the pulley falling prevention member 9 and the pulley 12 can be reduced. Therefore, even when the configuration is made in such a way that the pulley falling prevention member 9 is screwed to the rotation axle 11, it can be suppressed that the frictional force makes the pulley falling prevention member 9 detached from the rotation axle 11. As is the case with Embodiment 1, the axial-direction extending portion 9b may be formed in the shape of a cylindrical tube; alternatively, as is the case with Embodiment 2, the axial-direction extending portion 9b may be provided at the circumferential-direction two positions.

### Embodiment 4

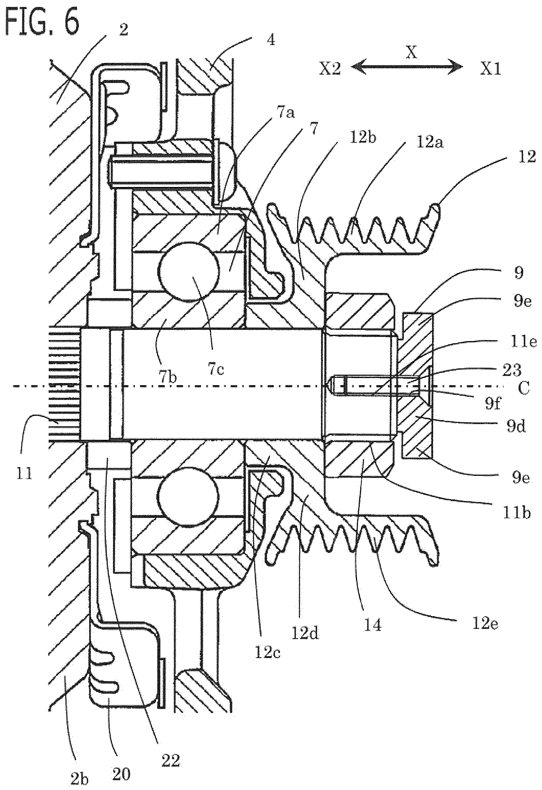

Next, a motor generator 1 according to Embodiment 4 will be explained. The explanation for constituent portions that are the same as those in foregoing Embodiment 1 will be omitted. The basic circuit configuration of the motor generator 1 according to the present embodiment is similar to that of Embodiment 1; however, the shape of a pulley falling prevention member 9 and the mounting method therefor are different from those of the pulley falling prevention member 9 in Embodiment 1. FIG. 6 is a principal-part cross-sectional view of the motor generator 1 according to the present embodiment, taken along a plane passing through the rotation axial center C of the rotation axle 11.

In the present embodiment, unlike Embodiment 1, the pulley falling prevention member 9 has a mounting portion 9d mounted on the front end of the rotation axle 11 at the axial-direction one side X1 and a radial-direction extending portion 9e that extends from the mounting portion 9d toward the radial-direction outer side and is disposed at the axial-direction one side X1 of the nut 14.

This configuration makes it possible that the nut 14 is prevented from falling out of the rotation axle 11 by merely mounting the pulley falling prevention member 9 having a simple shape on the front end of the rotation axle 11; as a result, it can be prevented that the pulley 12 falls out of the rotation axle 11.

In the present embodiment, the front endface of the rotation axle 11 is formed in the shape of the plane of a circle that is perpendicular to the rotation axial center C. The pulley falling prevention member 9 is formed in the shape of a disk as a whole; the mounting portion 9d is a cylindrical columnar portion that abuts on the front endface of the rotation axle 11; the radial-direction extending portion 9e is a cylindrical tubular portion at the radial-direction outer side of the mounting portion 9d. The mounting portion 9d and the radial-direction extending portion 9e form an integrated component.

The pulley falling prevention member 9 is mounted on the one end of the rotation axle 11 with a mounting component 23. This configuration makes it possible that even when an effect of the nut 14 or the pulley falling prevention member 9 is provided to the pulley falling prevention member 9, the effect is suppressed from being provided to the mounting component 23, which is separated from the pulley falling prevention member 9. Therefore, it can be suppressed that the pulley falling prevention member 9 is detached from the rotation axle 11.

A female screw portion 11e that opens toward the axial-direction one side X1 is provided on the front end of the rotation axle 11. In the pulley falling prevention member 9 (mounting portion 9d), a through-hole 9f that penetrates the mounting portion 9d in the axial direction X is provided. The pulley falling prevention member 9 is mounted on the one end of the rotation axle 11 with a screw 23, as the mounting component 23, that passes through the through-hole 9f of the pulley falling prevention member 9 from the axial-direction one side X1 and is screwed to the female screw portion 11e in the front end of the rotation axle 11.

This configuration makes it possible that even when due to rotation of the nut 14 or the pulley falling prevention member 9, the pulley falling prevention member 9 rotates, the pulley falling prevention member 9 is made to idly rotate with respect to the screw 23; thus, the screw can be suppressed from loosening.

The female screw portion 11e in the front end of the rotation axle 11 is a screw in which threading is made in a direction opposite to the direction of threading in the male screw portion 11b to which the nut 14 is screwed. This configuration makes it possible to more securely suppress the screw 23 from loosening.

### Embodiment 5

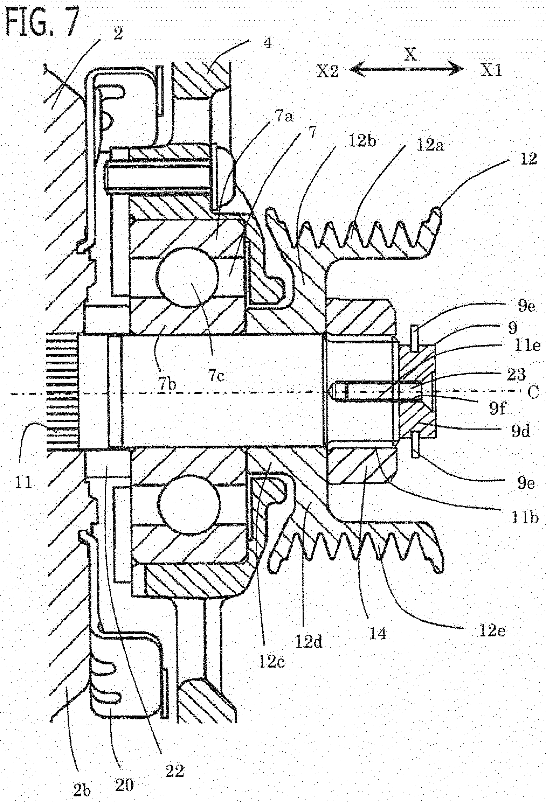

Next, a motor generator 1 according to Embodiment 5 will be explained. The explanation for constituent portions that are the same as those in foregoing Embodiment 1 will be omitted. The basic circuit configuration of the motor generator 1 according to the present embodiment is similar to that of Embodiment 1; however, the shape of a pulley falling prevention member 9 and the mounting method therefor are different from those of the pulley falling prevention member 9 in Embodiment 1. FIG. 7 is a principal-part cross-sectional view of the motor generator 1 according to the present embodiment, taken along a plane passing through the rotation axial center C of the rotation axle 11.

In the present embodiment, as is the case with Embodiment 4, the pulley falling prevention member 9 has a mounting portion 9d mounted on the front end of the rotation axle 11 at the axial-direction one side X1 and a radial-direction extending portion 9e that extends from the mounting portion 9d toward the radial-direction outer side and is disposed at the axial-direction one side X1 of the nut 14.

However, unlike Embodiment 4, the mounting portion 9d and the radial-direction extending portion 9e are components separated from each other. The mounting portion 9d is a cylindrical columnar component that abuts on the front endface of the rotation axle 11; an annular groove recessing toward the radial-direction inner side is formed in the outer circumferential surface of the mounting portion 9d. The radial-direction extending portion 9e is an annular-disk component, such as a snap ring, that is fit to the groove of the mounting portion 9d. As is the case with Embodiment 4, the mounting portion 9d is mounted on the one end of the rotation axle 11 with the screw 23.

The mounting portion 9d and the radial-direction extending portion 9e are components separated from each other; thus, it is made possible that even when due to rotation of the nut 14 or the pulley falling prevention member 9, the radial-direction extending portion 9e rotates, the radial-direction extending portion 9e is made to idly rotate with respect to the mounting portion 9d and hence the pulley falling prevention member 9 is suppressed from being detached from the rotation axle 11. Furthermore, because mounted with the screw 23, as a separate component, the mounting portion 9d can be suppressed from being detached from the rotation axle 11.

### <Other Embodiments>

Lastly, other embodiments of the present invention will be explained. Each of the configurations of embodiments to be explained below is not limited to be separately utilized but can be utilized in combination with the configurations of other embodiments as long as no discrepancy occurs.

(1) In each of the foregoing embodiments 1 through 3, there has been explained, as an example, the case where the female screw portion 9c of the pulley falling prevention member 9 is screwed to the small-diameter male screw portion 11c of the rotation axle 11 so that the pulley falling prevention member 9 is mounted on the rotation axle 11. However, embodiments of the present invention are not limited to the foregoing case. In other words, it may be allowed that the pulley falling prevention member 9 is mounted on the one end of the rotation axle 11, for example, through welding, crimping, press-fitting, with an adhesive, or with a separate mounting component such as a screw, a bolt, or a rivet.

For example, in each of Embodiments 1 through 3, a small-diameter fitting portion having a diameter smaller than that of the male screw portion 11b is provided at the axial-direction one side X1 of the male screw portion 11b situated at the one end of the rotation axle 11; in the central portion of the base portion 9a of the pulley falling prevention member 9, a through-hole that penetrates the central portion is provided; the inner circumferential surface of the through-hole in the pulley falling prevention member 9 is fit to the outer circumferential surface of the small-diameter fitting portion of the rotation axle 11. In the case of welding, the fitting portion is welded from the axial-direction one side X1. In the case of crimping, the respective end portions, at the axial-direction one side X1 and at the radial-direction outer side, of the small-diameter fitting portion of the rotation axle 11 are crimped toward the radial-direction outer side; the crimping portions are arranged at the axial-direction one side X1 of a portion of base portion 9a, in which the through-hole is formed. In the case of press-fitting, the press-fitting is performed when the fitting is made. In the case of adhesion, the fitting portion is bonded with an adhesive.

Alternatively, in each of Embodiments 1 through 3, the pulley falling prevention member 9 may be mounted on the one end of the rotation axle 11 with a mounting component such as a screw, a bolt, or a rivet. For example, as is the case with each of Embodiments 4 and 5, a female screw portion or a rivet mounting hole opening toward the axial-direction one side X1 is provided at the front end of the rotation axle 11. In the pulley falling prevention member 9 (base portion 9a), a through-hole that penetrates the base portion 9a in the axial direction X is provided. A screw or a bolt passes through the through-hole in the pulley falling prevention member 9 from the axial-direction one side X1 and is screwed to the female screw portion in the front end of the rotation axle 11; alternatively, a rivet is inserted into the rivet mounting hole in the front end of the rotation axle 11 and is riveted thereto.

(2) In each of foregoing Embodiments 4 and 5, there has been explained, as an example, the case where the pulley falling prevention member 9 is mounted on the one end of the rotation axle 11 with the mounting component 23, which is a screw. However, embodiments of the present invention are not limited to the foregoing case. In other words, it may be allowed that the pulley falling prevention member 9 is mounted on the one end of the rotation axle 11, for example, through welding, with an adhesive, or with a separate mounting component such as a bolt or a rivet.

(3) In each of the foregoing embodiments, there has been explained, as an example, the case where the inner circumferential surface of the pulley 12 is fit to the outer circumferential surface of the rotation axle 11. However, it may be allowed that a rotation locking mechanism is provided at the fitting portion between the pulley 12 and the rotation axle 11. For example, it may be allowed that a key groove recessing toward the radial-direction inner side and extending in the axial direction X is provided in the outer circumferential surface of the rotation axle 11 and that a key protruding toward the radial-direction inner side and extending in the axial direction X is provided in the inner circumferential surface of the pulley 12.

(4) In each of the foregoing embodiments, there has been explained, as an example, the case where the pulley 12 has the pulley main portion 12a and the inner supporting portion 12b. However, embodiments of the present invention are not limited to the foregoing case. In other words, the pulley 12 may be formed in the shape of a cylindrical tube in which the pulley main portion 12a and the inner supporting portion 12b are integrated with each other. In this case, the endface of the nut 14 at the axial-direction the other side X2 abuts on the endface of the cylindrical tubular pulley 12 at the axial-direction one side X1. The axial-direction extending portion 9b is disposed at the radial-direction outer side of the nut 14; when the nut 14 loosens, the endface of the axial-direction extending portion 9b at the axial-direction the other side X2 abuts on the endface of the cylindrical tubular pulley 12 at the axial-direction one side X1.

(5) In each of the foregoing embodiments, there has been explained, as an example, the case where the controller 1b and the motor generator main body 1a are integrated with each other. However, it may be allowed that part of or all of the controller 1b is separated from the motor generator 1 or that the separated part of the controller 1b is not included in the motor generator 1.

(6) In each of the foregoing embodiments, there has been explained, as an example, the case where an electromagnet is provided in the rotor 2. However, it may be allowed that the rotor 2 is provided with a permanent magnet.

In the scope of the present invention, the embodiments thereof can freely be combined with one another and can appropriately be modified or omitted, without departing from the scope of protection as defined in claim 1.

### REFERENCE SIGNS LIST

1: motor generator
2: rotor
3: stator
3a: stator winding
3b: stator iron core
4, 5: bracket
9: pulley falling prevention member
9a: base portion
9b: axial-direction extending portion
9c: female screw portion
9d: mounting portion
9e: radial-direction extending portion
9f: through-hole
11: rotation axle
11b: male screw portion
11c: small-diameter male screw portion
11e: female screw portion
12: pulley
12a: pulley main portion
12b: inner supporting portion
12e: one-side pulley extending portion
14: nut
23: mounting component
D1: gap between axial-direction extending portion and pulley
D2: gap between base portion and nut
X: axial direction
X1: axial-direction one side
X2: axial-direction the other side

## Claims

1. A motor generator (1) comprising:
a rotation axle (11) pivotably supported by a bracket;
a rotor (2) fixed on the rotation axle (11);
a stator (3) that has a stator iron core (3b) disposed at a radial-direction outer side of the rotor (2) and a stator winding (3a) mounted on the stator iron core (3b) and is fixed to the bracket; and
a pulley (12) that is fastened to one end of the rotation axle (11), which is the end at an axial-direction one side (X1), in such a way as to rotate integrally with the rotation axle (11), and that performs bidirectional transfer of driving power between an external apparatus and itself, the pulley comprising a main portion (12a) around which a belt is wound and an inner supporting portion (12b) that supports the pulley main portion (12a) from the radial direction inner side, wherein while the supporting portion (12b) is fitted to the outer circumferential surface of a fitting portion of the one end of the rotation axle (11), the pulley (12) is fastened to the rotation axle (11) with a nut (14) screwed to a male screw portion (11b) provided in the outer circumferential surface of the rotation axle (11) at the axial-direction one side (X1) axially further than the fitting portion of the pulley (12), and
wherein on a portion of the rotation axle (11) at the axial-direction one side (X1) axially further than the nut (14), there is mounted a pulley falling prevention member (9) that prevents the pulley (12) from falling out of the rotation axle (11) when the nut (14) loosens,
wherein the pulley falling prevention member (9) has a base portion (9a) extending from the portion of the rotation axle, on which the pulley falling prevention member (9) is mounted, toward the radial-direction outer side, and an axial-direction extending portion (9b) extending from the base portion (9a) toward the axial-direction the other side (X2) in a space at the radial-direction outer side of the nut (14), and the radial direction inner side of the main portion (12a) of the pulley (12) and wherein when the nut (14) loosens, an endface of the axial-direction extending portion (9b) at the axial-direction the other side (X2) abuts on the pulley (12) so that the pulley (12) is prevented from falling out of the rotation axle (11),
wherein, while the pulley (12) is fastened to the rotation axle (11) through screwing of the nut (14), a gap (D1) in the axial direction (X) is provided between the end face of axial-direction extending portion (9b) and the inner supporting portion (12b) of the pulley (12) and a gap (D2) in the axial direction (X) is provided between the base portion (9a) and the nut (14), **characterised in that** the gap (D1) between the axial-direction extending portion (9b) and the pulley (12) is narrower than the gap (D2) between the base portion (9a) and the nut (14), and the axial length of each of the gaps (D1,D2) is constant along the radial direction.

2. The motor generator (1) according to claim 1,
wherein the pulley (12) main portion (12a), around which the belt is wound, has a cylindrical tubular shape, the pulley main portion (12a) has a one-side pulley extending portion (12e) that extends from a connection portion between the inner supporting portion (12b) and itself toward the axial-direction one side (X1), wherein at the radial-direction inner side of the one-side pulley extending portion (12e), the nut (14) is disposed spaced by a gap away from the one-side pulley extending portion (12e) and presses an endface of the inner supporting portion (12b) at the axial-direction one side (X1) toward the axial-direction the other side (X2) so as to fasten the pulley (12) to the rotation axle (11), andwherein the axial-direction extending portion (9b) is disposed in a cylindrical tubular space between the one-side pulley extending portion (12e) and the nut (14).

3. The motor generator (1) according to any one of claims 1 and 2, wherein the axial-direction extending portions (9b) and the base portions (9a) are each provided at a plurality of positions in the circumferential direction.

4. The motor generator (1) according to any one of claims 1 to 3,
wherein the base portion (9a) is formed in the shape of a disk, and
wherein the axial-direction extending portion (9b) is formed in the shape of a cylindrical tube that extends from the radial-direction outer end portion of the base portion (9a) toward the axial-direction the other side (X2).

5. The motor generator (1) according to any one of claims 1 to 4, wherein the front-end portion of the axial-direction extending portion (9b) at the axial-direction the other side (X2) has a tapered shape.

6. The motor generator (1) according to claim 1, wherein a small-diameter male screw portion (11c) having a diameter smaller than the diameter of the male screw portion (11b) is provided at the axial-direction one side (X1) of the male screw portion (11b) at the one end of the rotation axle (11), and a female screw portion (9c) provided in the pulley falling prevention member (9) is screwed to the small-diameter male screw portion (11c), so that the pulley falling prevention member (9) is mounted on the one end of the rotation axle (11).

7. The motor generator (1) according to claim 6, wherein the small-diameter male screw portion (11c) is a screw in which threading is made in a direction opposite to the direction of threading in the male screw portion (11b).

8. The motor generator (1) according to any one of claims 1 to 7, wherein the pulley falling prevention member (9) is mounted on the one end of the rotation axle (11) with a mounting component.

9. The motor generator (1) according to claim 8, wherein a female screw portion (11e) opening toward the axial-direction one side (X1) is provided at the front end of the rotation axle (11), and the pulley falling prevention member (9) is mounted on the one end of the rotation axle (11) with a screw that passes through a through-hole provided in the pulley falling prevention member (9) from the axial-direction one side (X1) and is screwed to the female screw portion (11e).

10. The motor generator (1) according to any one of claims 1 to 5, wherein the pulley falling prevention member (9) is mounted on the one end of the rotation axle (11) through crimping, welding, press-fitting, with a rivet, or with an adhesive.

## Patentansprüche

1. Motorgenerator (1), umfassend:
eine Drehachse (11), die schwenkbar von einer Halterung getragen wird;
einen Rotor (2), der auf der Drehachse (11) fixiert ist;
einen Stator (3), der einen Statoreisenkern (3b) aufweist, der an einer radial gerichteten Außenseite des Rotors (2) angeordnet ist, und eine Statorwicklung (3a), die an dem Statoreisenkern (3b) montiert und an der Halterung fixiert ist; und
eine Riemenscheibe (12), die an einem Ende der Drehachse (11) befestigt ist, die das Ende an einer axial gerichteten einen Seite (X1) ist, um sich integral mit der Drehachse (11) zu drehen, und die eine bidirektionale Übertragung der Antriebsleistung zwischen einer externen Einrichtung und sich selbst durchführt, wobei die Riemenscheibe einen Hauptabschnitt (12a), um den ein Riemen gewickelt ist, und einen inneren Stützabschnitt (12b) umfasst, der den Hauptabschnitt (12a) der Riemenscheibe von der radial gerichteten Innenseite stützt, wobei, während der Stützabschnitt (12b) an der äußeren Umfangsfläche eines Passabschnitts des einen Endes der Drehachse (11) angebracht ist, die Riemenscheibe (12) mit einer Mutter (14) an der Drehachse (11) befestigt ist, die mit einem in der äußeren Umfangsfläche der Drehachse (11) bereitgestellten Verschraubabschnitt (11b) in der axialen Richtung einer Seite (X1) axial weiter als der Passabschnitt der Riemenscheibe (12) verschraubt ist, und wobei
an einem Abschnitt der Drehachse (11) auf der axial gerichteten einen Seite (X1), die axial weiter als die Mutter (14) liegt, ein Riemenscheiben-Herausfallverhinderungselement (9) montiert ist, das verhindert, dass die Riemenscheibe (12) aus der Drehachse (11) herausfällt, wenn sich die Mutter (14) löst,
wobei das Riemenscheiben-Herausfallverhinderungselement (9) einen Basisabschnitt (9a) aufweist, der sich vom Abschnitt der Drehachse, an dem das Riemenscheiben-Herausfallverhinderungselement (9) montiert ist, in Richtung der radial gerichteten Außenseite erstreckt, und einen axial gerichteten Erstreckungsabschnitt (9b), der sich vom Basisabschnitt (9a) in Richtung der axial gerichteten anderen Seite (X2) in einem Raum an der radial gerichteten Außenseite der Mutter (14) und der radial gerichteten Innenseite des Hauptabschnitts (12a) der Riemenscheibe (12) erstreckt, und wobei, wenn sich die Mutter (14) löst, eine Stirnseite des axial gerichteten Erstreckungsabschnitts (9b) an der axial gerichteten anderen Seite (X2) an der Riemenscheibe (12) anliegt, sodass die Riemenscheibe (12) daran gehindert wird, aus der Drehachse (11) herauszufallen,
wobei, während die Riemenscheibe (12) durch Verschrauben der Mutter (14) an der Drehachse (11) befestigt ist, ein Spalt (D1) in der axialen Richtung (X) zwischen der Stirnseite des axial gerichteten Erstreckungsabschnitts (9b) und dem inneren Stützabschnitt (12b) der Riemenscheibe (12) bereitgestellt ist, und ein Spalt (D2) in der axialen Richtung (X) zwischen dem Basisabschnitt (9a) und der Mutter (14) bereitgestellt ist, **dadurch gekennzeichnet, dass**
der Spalt (D1) zwischen dem axial gerichteten Erstreckungsabschnitt (9b) und der Riemenscheibe (12) schmaler ist als der Spalt (D2) zwischen dem Basisabschnitt (9a) und der Mutter (14), und die axiale Länge jedes der Spalte (D1,D2) entlang der radialen Richtung konstant ist.

2. Motorgenerator (1) nach Anspruch 1,
wobei der Hauptabschnitt (12a) der Riemenscheibe (12), um die der Riemen gewickelt ist, eine zylindrische röhrenförmige Form aufweist, der Hauptabschnitt (12a) der Riemenscheibe einen einseitigen Erstreckungsabschnitt (12e) aufweist, der sich von einem Verbindungsabschnitt zwischen dem inneren Stützabschnitt (12b) und sich selbst in Richtung der axial gerichteten einen Seite (X1) erstreckt, wobei an der radial gerichteten Innenseite des einseitigen Erstreckungsabschnitts (12e) der Riemenscheibe die Mutter (14) um einen Spalt von dem einseitigen Erstreckungsabschnitt (12e) der Riemenscheibe beabstandet angeordnet ist, und eine Stirnseite des inneren Stützabschnitts (12b) an der axial gerichteten einen Seite (X1) in Richtung der axial gerichteten anderen Seite (X2) drückt, um die Riemenscheibe (12) an der Drehachse (11) zu befestigen, und wobei der axial gerichtete Erstreckungsabschnitt (9b) in einem zylindrischen röhrenförmigen Raum zwischen dem einseitigen Erstreckungsabschnitt (12e) der Riemenscheibe und der Mutter (14) angeordnet ist.

3. Motorgenerator (1) nach einem der Ansprüche 1 und 2, wobei die axial gerichteten Erstreckungsabschnitte (9b) und die Basisabschnitte (9a) jeweils an einer Vielzahl von Positionen in der Umfangsrichtung bereitgestellt sind.

4. Motorgenerator (1) nach einem der Ansprüche 1 bis 3,
wobei der Basisabschnitt (9a) scheibenförmig ausgebildet ist, und
wobei der axial gerichtete Erstreckungsabschnitt (9b) in Form eines zylindrischen Rohres gebildet ist, das sich von dem radial gerichteten äußeren Endabschnitt des Basisabschnitts (9a) in Richtung der axial gerichteten anderen Seite (X2) erstreckt.

5. Motorgenerator (1) nach einem der Ansprüche 1 bis 4, wobei der vordere Endabschnitt des axial gerichteten Erstreckungsabschnitts (9b) an der axial gerichteten anderen Seite (X2) eine sich verjüngende Form aufweist.

6. Motorgenerator (1) nach Anspruch 1, wobei ein Verschraubungsabschnitt (11c) mit einem kleinen Durchmesser, der einen kleineren Durchmesser als der Verschraubungsabschnitt (11b) aufweist, an der axial gerichteten einen Seite (X1) des Verschraubungsabschnitts (11b) an dem einen Ende der Drehachse (11) bereitgestellt ist, und ein Einschraubabschnitt (9c), der in dem Riemenscheiben-Herausfallverhinderungselement (9) bereitgestellt ist, mit dem Verschraubungsabschnitt (11c) mit einem kleinen Durchmesser verschraubt ist, sodass das Riemenscheiben-Herausfallverhinderungselement (9) an dem einen Ende der Drehachse (11) montiert ist.

7. Motorgenerator (1) nach Anspruch 6, wobei der Verschraubungsabschnitt (11c) mit einem kleinen Durchmesser eine Schraube ist, in die ein Gewinde in einer Richtung gedreht ist, die der Gewinderichtung in dem Verschraubungsabschnitt (11b) entgegengesetzt ist.

8. Motorgenerator (1) nach einem der Ansprüche 1 bis 7, wobei das Riemenscheiben-Herausfallverhinderungselement (9) an dem einen Ende der Drehachse (11) mit einer Montagekomponente montiert ist.

9. Motorgenerator (1) nach Anspruch 8, wobei ein Einschraubabschnitt (11e), der sich in Richtung der axial gerichteten einen Seite (X1) öffnet, an dem vorderen Ende der Drehachse (11) bereitgestellt ist, und das Riemenscheiben-Herausfallverhinderungselement (9) an dem einen Ende der Drehachse (11) mit einer Schraube montiert ist, die durch ein Durchgangsloch, das in dem Riemenscheiben-Herausfallverhinderungselement (9) bereitgestellt ist, von der axial gerichteten einen Seite (X1) verläuft und mit dem Einschraubabschnitt (11e) verschraubt ist.

10. Motorgenerator (1) nach einem der Ansprüche 1 bis 5, wobei das Riemenscheiben-Herausfallverhinderungselement (9) durch Crimpen, Schweißen, Einpressen, mit einem Niet oder mit einem Klebstoff an dem einen Ende der Drehachse (11) montiert ist.

## Revendications

1. Moteur-générateur (1) comportant :
un axe de rotation (11) supporté de manière pivotante par un support ;
un rotor (2) fixé sur l'axe de rotation (11) ;
un stator (3) qui présente un noyau en fer de stator (3b) disposé au niveau d'un côté externe dans le sens radial du rotor (2) et un enroulement de stator (3a) monté sur le noyau en fer de stator (3b) et est fixé au support ; et
une poulie (12) qui est fixée à une extrémité de l'axe de rotation (11), qui est l'extrémité au niveau du premier côté dans le sens axial (X1), de manière à tourner d'un seul tenant avec l'axe de rotation (11), et qui réalise un transfert bidirectionnel de puissance d'entraînement entre un appareil externe et elle-même, la poulie comportant une partie principale (12a) autour de laquelle une courroie est enroulée et une partie de support interne (12b) qui supporte la partie principale de poulie (12a) depuis le côté interne dans le sens radial, dans lequel, alors que la partie de support (12b) est ajustée sur la surface circonférentielle externe d'une partie d'ajustement d'une extrémité de l'axe de rotation (11), la poulie (12) est fixée à l'axe de rotation (11) avec un écrou (14) vissé à une partie de vis mâle (11b) prévue dans la surface circonférentielle externe de l'axe de rotation (11) au niveau du premier côté dans le sens axial (X1) axialement plus loin que la partie d'ajustement de la poulie (12), et dans lequel
sur une partie de l'axe de rotation (11) au niveau du premier côté dans le sens axial (X1) axialement plus loin que l'écrou (14), un organe de prévention de chute de poulie (9) est monté, qui empêche la poulie (12) de tomber de l'axe de rotation (11) lorsque l'écrou (14) est desserré,
dans lequel l'organe de prévention de chute de poulie (9) présente une partie de base (9a) s'étendant à partir de la partie de l'axe de rotation, sur laquelle l'organe de prévention de chute de poulie (9) est monté, en direction du côté externe dans le sens radial, et une partie d'extension dans le sens axial (9b) s'étendant à partir de la partie de base (9a) en direction de l'autre côté dans le sens axial (X2) dans un espace au niveau du côté externe dans le sens radial de l'écrou (14), et le côté interne dans le sens radial de la partie principale (12a) de la poulie (12) et dans lequel lorsque l'écrou (14) est desserré, une face d'extrémité de la partie s'étendant dans le sens axial (9b) au niveau de l'autre côté dans le sens axial (X2) vient buter sur la poulie (12) de sorte que la poulie (12) soit empêchée de tomber hors de l'axe de rotation (11),
dans lequel, alors que la poulie (12) est fixée à l'axe de rotation (11) par vissage de l'écrou (14), un espace (D1) dans le sens axial (X) est prévu entre la face d'extrémité de la partie s'étendant dans le sens axial (9b) et la partie de support interne (12b) de la poulie (12) et un espace (D2) dans le sens axial (X) est prévu entre la partie de base (9a) et l'écrou (14), **caractérisé en ce que**
l'espace (D1) entre la partie s'étendant dans le sens axial (9b) et la poulie (12) est plus étroit que l'espace (D2) entre la partie de base (9a) et l'écrou (14), et la longueur axiale de chacun des espaces (D1, D2) est constante le long du sens radial.

2. Moteur-générateur (1) selon la revendication 1,
dans lequel la partie principale (12a) de poulie (12), autour de laquelle la courroie est enroulée, présente une forme tubulaire cylindrique, la partie principale de poulie (12a) présente une partie d'extension de poulie unilatérale (12e) qui s'étend à partir d'une partie de raccordement entre la partie de support interne (12b) et elle-même en direction du premier côté dans le sens axial (X1), dans lequel au niveau du côté interne dans le sens radial de la partie d'extension de poulie unilatérale (12e), l'écrou (14) est disposé espacé d'un espace par rapport à la partie d'extension de poulie unilatérale (12e) et presse une face d'extrémité de la partie de support interne (12b) au niveau du premier côté dans le sens axial (X1) en direction de l'autre côté dans le sens axial (X2) de manière à fixer la poulie (12) à l'axe de rotation (11), et dans lequel la partie d'extension dans le sens axial (9b) est disposée dans un espace tubulaire cylindrique entre la partie d'extension de poulie unilatérale (12e) et l'écrou (14).

3. Moteur-générateur (1) selon l'une quelconque des revendications 1 et 2, dans lequel les parties d'extension dans le sens axial (9b) et les parties de base (9a) sont chacune prévues au niveau d'une pluralité de positions dans le sens circonférentiel.

4. Moteur-générateur (1) selon l'une quelconque des revendications 1 à 3,
dans lequel la partie de base (9a) est formée sous la forme d'un disque, et
dans lequel la partie s'étendant dans le sens axial (9b) est formée sous la forme d'un tube cylindrique qui s'étend depuis la partie d'extrémité externe dans le sens radial de la partie de base (9a) en direction de l'autre côté dans le sens axial (X2).

5. Moteur-générateur (1) selon l'une quelconque des revendications 1 à 4, dans lequel la partie d'extrémité avant de la partie d'extension dans le sens axial (9b) au niveau de l'autre côté dans le sens axial (X2) présente une forme conique.

6. Moteur-générateur (1) selon la revendication 1, dans lequel une partie de vis mâle de petit diamètre (11c) présentant un diamètre inférieur au diamètre de la partie de vis mâle (11b) est prévue au niveau du premier côté dans le sens axial (X1) de la partie de vis mâle (11b) au niveau de la première extrémité de l'axe de rotation (11), et une partie de vis femelle (9c) prévue dans l'organe de prévention de chute de poulie (9) est vissée sur la partie de vis mâle de petit diamètre (11c), de sorte que l'organe de prévention de chute de poulie (9) soit monté sur la première extrémité de l'axe de rotation (11).

7. Moteur-générateur (1) selon la revendication 6, dans lequel la partie de vis mâle de petit diamètre (11c) est une vis dans laquelle un filetage est réalisé dans un sens opposé au sens de filetage dans la partie de vis mâle (11b).

8. Moteur-générateur (1) selon l'une quelconque des revendications 1 à 7, dans lequel l'organe de prévention de chute de poulie (9) est monté sur la première extrémité de l'axe de rotation (11) avec un composant de montage.

9. Moteur-générateur (1) selon la revendication 8, dans lequel une partie de vis femelle (11e) s'ouvrant en direction du premier côté dans le sens axial (X1) est prévue au niveau de l'extrémité avant de l'axe de rotation (11), et l'organe de prévention de chute de poulie (9) est monté sur la première extrémité de l'axe de rotation (11) avec une vis qui passe à travers un trou traversant prévu dans l'organe de prévention de chute de poulie (9) depuis le premier côté dans le sens axial (X1) et est vissée sur la partie de vis femelle (11e).

10. Moteur-générateur (1) selon l'une quelconque des revendications 1 à 5, dans lequel l'organe de prévention de chute de poulie (9) est monté sur ladite extrémité de l'axe de rotation (11) par sertissage, soudage, emmanchement à force, avec un rivet ou avec un adhésif.
